(19) Europäisches Patentamt

European Patent Office

Office européen des brevets

(11) Veröffentlichungsnummer: **0 105 865**
**B1**

(12) **EUROPÄISCHE PATENTSCHRIFT**

(45) Veröffentlichungstag der Patentschrift:
**07.01.87**

(21) Anmeldenummer: **83890166.8**

(22) Anmeldetag: **21.09.83**

(51) Int. Cl.⁴: **F 16 B 13/02, F 16 L 3/08**

(54) Befestigungselement.

(30) Priorität: **04.10.82 AT 3661/82**

(43) Veröffentlichungstag der Anmeldung:
**18.04.84 Patentblatt 84/16**

(45) Bekanntmachung des Hinweises auf die Patenterteilung:
**07.01.87 Patentblatt 87/2**

(84) Benannte Vertragsstaaten:
**BE CH DE FR GB IT LI LU NL SE**

(56) Entgegenhaltungen:
**CA - A - 1 012 731**
**DD - A - 21 318**
**DE - A - 2 210 443**
**DE - A - 2 246 833**
**DE - B - 1 130 147**
**DE - U - 1 937 138**

**Soviet Inventions Illustrated Week B22, 11. Juli 1979**
**Sektion Q21 & SU-A-615-267**
**Soviet Inventions Illustrated Week D11, 22. April 1981 &**
**SU-A-731-104**

(73) Patentinhaber: **Schnabl, Ludwig, Venusberger**
**Strasse 19, A-3133 Traismauer (AT)**

(72) Erfinder: **Schnabl, Ludwig, Venusberger Strasse 19,**
**A-3133 Traismauer (AT)**

(74) Vertreter: **Collin, Hans, Dipl.-Ing. Dr. et al, Patentanwälte**
**Dipl.-Ing. Dr. Hans Collin Dipl.-Ing. Erwin Buresch**
**Dipl.-Ing. Dr. Helmut Wildhack Dipl.-Ing. Armin Häupl**
**Mariahilfer Strasse 50, A-1070 Wien (AT)**

## Beschreibung

Die Erfindung betrifft ein Befestigungselement, insbesondere für Installationsrohre oder -kabel an einer Wand oder Decke, das einen gegebenenfalls längsgeteilten Schaft aufweist, der von Exzentern gebildete, in einer die Schaftachse enthaltenden Ebene verschwenkbaren Spreizkörper zur kraftschlüssigen Verbindung mit einer Bohrlochwand trägt, wobei die Exzenterflächen in bezug auf die Schwenkpunkte bzw. -achsen der Exzenter in Ausziehrichtung des Befestigungselementes aus dem Bohrloch gesehen zunehmenden Abstand aufweisen, insbesondere in einem Schnitt in Längsrichtung zum Schaft eine nach aussen gekrümmte Linie bilden.

Um elektrische Rohrleitungen, Kabel u.dgl. an Wänden zu befestigen, wird die Wand in gleichen Abständen angebohrt, es werden Dübel in die Bohrlöcher eingeschoben und Montageschellen oder Tragstücke für Montageschellen werden festgeschraubt. Eine einfachere Variante der Montage sieht vor, dass in die Bohrlöcher Spreizdübel unter Kraftanwendung eingepresst werden, die einstückig mit den Montageschellen ausgebildet sind.

Die Montage mit Hilfe von Schrauben ist arbeitsintensiv, teuer und ist bei schlecht zugänglichen Stellen sehr schwierig. Die als Alternative oben erwähnten Dübelschellen erfordern grössere Kraft beim Einschieben in die Bohrlöcher, können aber meist mit dem selben Kraftaufwand wieder herausgezogen werden. Daraus ergibt sich, dass diese Dübelschellen nicht allen Lastfällen gerecht werden.

Aus der DE-A-22 46 833 ist eine Befestigungsvorrichtung bekannt, mit einem in eine Aufnahmebohrung einzusetzenden Futterstück mit einem in diese Aufnahmebohrung greifenden Verankerungsabschnitt, der auf wenigstens einem Teil seiner Länge von einer zentralen Öffnung durchsetzt ist, und einen Auflageflansch besitzt, der die Eindringtiefe des Futterstückes in die Aufnahmebohrung begrenzt, und mit einem Anschlussstück, das einen im Futterstück durch Klemmsitz zentrierten und gehalterten Steckzapfen enthält. Dabei ist die Aussenfläche des Verankerungsabschnittes des Futterstückes mit einer Anzahl senkrecht von diesem Abschnitt abstehender und diesen mindestens teilweise umgreifender rippenförmiger Sperrelemente versehen, die in radialer Richtung des Verankerungsabschnittes praktisch inkompressibel, in dessen Längsrichtung jedoch nachgiebig verformt sind. Die Sperrelemente weisen nicht die Form eines Exzenters auf, sind mit ihrer Basis mit dem Verankerungsabschnitt einstückig aber nicht schwenkbar verbunden und verjüngen sich von ihrer Basis zu ihrem Ende hin.

Aus den Soviet Inventions Illustrated Week B22, 11. Juli 1979 Sektion Q21 & SU-A-615-267 und Soviet Inventions Illustrated Week D11, 22. April 1981 & SU-A-731-104 ist ein Befestigungselement der eingangs genannten Art bekannt. Der schwenkbar am Schaft gelagerte Exzenter ist jedoch nicht einstückig mit dem Schaft und der Schwenkpunkt liegt nicht im Bereich der Schaftoberfläche und wird nicht von einer dünnen Biegeverbindung realisiert.

Die Erfindung zielt darauf ab, ein Befestigungselement zu schaffen, das einfach herstellbar ist und ohne Werkzeug und mit ganz geringem Kraftaufwand in ein Bohrloch eingebracht werden kann und das sich unter Zug weitgehend schlupflos an die Bohrungswand anlegt und jedem in der Praxis auftretenden Belastungsfall widersteht. Dies wird mit einem Befestigungselement der eingangs beschriebenen Art dadurch erreicht, dass die Exzenter mit dem Schaft einstückig ausgebildet und über eine dünne Biegeverbindung mit ihm verbunden sind, z.B. im Bereich der Schwenkachse durch einen dünnen Steg mit dem Schaft verbunden sind, wobei die Schwenkpunkte bzw. -achsen der Exzenter im Bereich der Schaftoberfläche liegen. Beim Einschieben des Befestigungselementes weichen die Exzenter zur Seite und gleiten an der Bohrlochwand entlang. Wird Zug auf das Befestigungselement ausgeübt, dann bewegt der belastete Schaft die an der Bohrlochwand anliegenden Exzenter auseinander, also in Richtung auf das Abstandsmaximum jedes Exzenters von seiner Schwenk- bzw. Drehachse. Mit zunehmendem Zug steigt die Haltekraft. Die Ausführung eignet sich für Bohrlöcher mit unterschiedlichen Durchmessern. Es bedarf keiner exakten Bohrung und überdies spielt es keine Rolle, wenn das Material der Wand porös ist und dadurch der Durchmesser der Bohrung variiert. Die Exzenter wälzen sich an der Wand der Bohrung so lange ab, bis der Kraftschluss mit der Wand der Zugkraft entspricht. Eine Vorspannung der Exzenter in radialer Richtung nach aussen bewirkt, dass auch ein unbelastetes Befestigungselement bereits eine gewisse, für die Wirkung notwendige radiale Kraftwirkung auf die Bohrlochwand ausübt. Durch Schwenkpunkt an der Schaftoberfläche wird die Herstellung als einstückiger Bauteil einfach und es werden günstige Kräfteverhältnisse bei Zug auf das Befestigungselement erreicht.

Bevorzugt ist es, wenn die Krümmung der Exzenterfläche kreisförmig, elliptisch oder gemäss der Umfangslinie eines Vieleckes verläuft. Es ist ferner möglich, dass die Exzenterfläche eine Kugelfläche ist, deren Mittelpunkt ausserhalb des Drehpunktes bzw. der Drehachse liegt. Die Kugelfläche wälzt sich in axialer Richtung des Schaftes an der Bohrlochwand ab und liegt in radialer Richtung, also im Querschnitt betrachtet, in jeder Bewegungsphase im wesentlichen am gesamten Umfang der Bohrungswand an. Der Exzenter kann als Körper ausgebildet sein, der durch zwei Ebenen aus einer Kugel herausgeschnitten ist, wobei die beiden Ebenen einander schneiden und die Schnittspur ausserhalb des Kugelmittelpunktes liegt. Im Bereich der Schnittspur befindet sich die Schwenk- bzw. Drehachse des Exzenters. Der Exzenter kann auch etwa trapezförmig, birnenförmig oder oval ausgebildet sein (Exzenternocken) und an einem Punkt – dem Schwenk- bzw. Drehpunkt – oder längs einer Geraden – der Schwenk- bzw. Drehachse – mit dem Schaft des Befestigungselementes verbunden sein. Es ist ferner möglich, dass die Exzenterfläche eine Zylinderfläche ist, deren Achse ausserhalb der Drehachse des Exzenters liegt. Dabei kann vorgesehen sein, dass der Mittelpunkt der Kugel- oder Zylinderfläche der Halterung näher gelegen ist als der Drehpunkt des Exzenters oder auf derselben Höhe wie dieser gelegen ist.

Zur leichteren Schwenk- bzw. Drehbarkeit kann der Exzenter mit dem Schaft über einen dünnen Steg verbunden sein. Das Befestigungselement wird als Massenprodukt aus Kunststoff, Metall oder anderen hierfür verwendbaren Materialien gefertigt. Zur Vermeidung eines Schlupfes beim Belasten des Befestigungselementes kann es zweckmässig sein, wenn die Exzenterflächen eine rauhe, insbesondere gerippte Oberfläche aufweisen. Es hängt vom Baustoff der Wand ab (Gips, Beton), welche Oberfläche gewählt wird. Es hat sich gezeigt, dass bei porösen Baustoffen eine glatte Oberfläche der Exzenter eine grössere Haltekraft des Befestigungselementes bewirkt, als eine rauhe Oberfläche.

Eine besondere Ausführungsform ist dadurch gekennzeichnet, dass der Schaft etwa rechteckigen Querschnitt aufweist und die Exzenter die Stirnansicht des Befestigungselementes zu einem Oval ergänzen, und der kleinste Durchmesser des Ovales etwa dem Nenndurchmesser eines korrespondierenden Bohrloches entspricht. Dieses Oval wird dann erreicht, wenn die in Richtung Halterung weisende ebene Fläche des Exzenters an dem Schaft anliegt. Der besondere Effekt des erfindungsgemässen Befestigungselementes liegt darin, dass es sich an verschiedene Bohrungsdurchmesser selbsttätig anpasst und bei gleicher Belastung mit etwa konstanter Haltekraft unabhängig vom Bohrlochdurchmesser festsitzt. Die Exzenter sind so vorgespannt, dass sie sich jedenfalls an die Bohrlochwand anlegen. Zweckmässig ist es somit, dass die Exzenter in Schwenkrichtung auf ihre grösste Ausladung vorgespannt sind bzw. dass in der grössten Ausladung die Exzenterfläche bzw. andere Ebene des Exzenters am Schaft anliegt.

Bei einer weiteren bevorzugten Ausführungsform ist vorgesehen, dass der Schaft an seinem der Schaftspitze gegenüberliegenden Ende mindestens einen Schenkel aufweist, der gegen die Schaftspitze geneigt ist und der entgegen Federkraft, insbesondere seiner materialbedingten Elastizität, in Richtung auf die 90°-Lage gegenüber der Schaftachse verdrehbar ist. Dabei kann es vorteilhaft sein, wenn zwei diametral liegende Schenkel vorgesehen sind, die Zähne tragen und wenn eine am Schaft angeordnete Halterung Fortsätze aufweist, die etwa bei Strecklage der Schenkel in die Zahnlücken einsetzbar sind.

Ausführungsbeispiele des Erfindungsgegenstandes sind in den Zeichnungen dargestellt.

Fig. 1 zeigt den Schaft eines Befestigungselementes in Seitenansicht,

Fig. 1a zeigt einen Teilschnitt des Schaftes,

Fig. 1b eine Ausführungsform eines Exzenters,

Fig. 2 einen Grundriss des Schaftes,

Fig. 3 einen Schrägriss des Schaftes; die

Fig. 4, 5, 6 zeigen ein Befestigungselement in Bohrlöchern verschiedener Durchmesser, die

Fig. 7, 8, 9 ein komplettes Befestigungselement in verschiedenen Montagezuständen und die

Fig. 10, 11, 12 und 13 verschiedene Klemm- und Haltestücke, die an den Schaft des Befestigungselementes anschliessen.

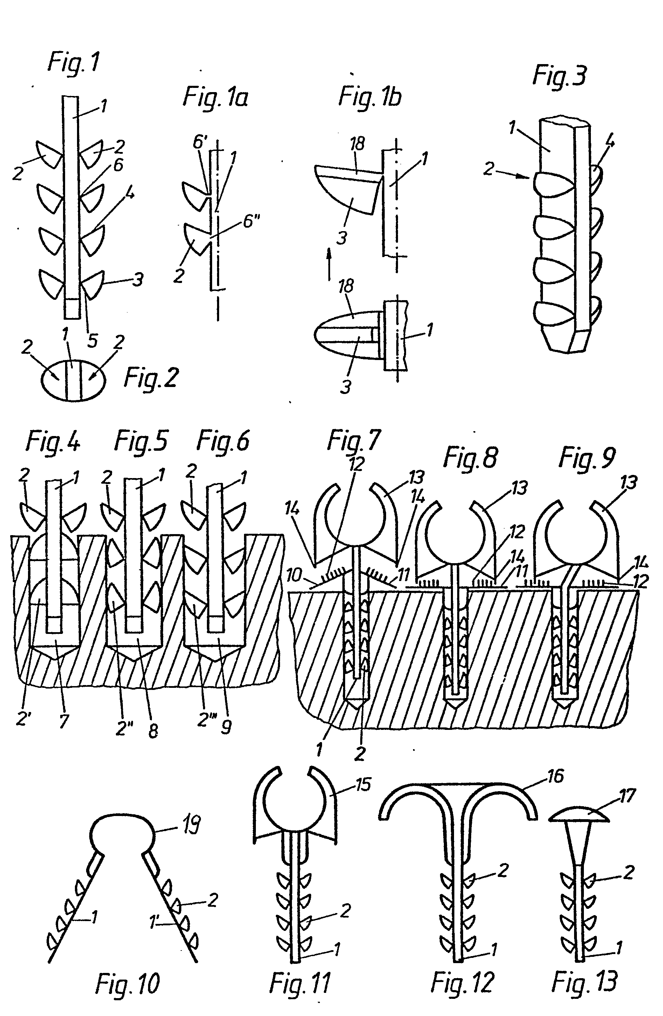

Fig. 1 zeigt einen Schaft 1 eines Befestigungselementes, auf welchem Exzenter 2 schwenkbar angeordnet sind. Die Exzenter 2 nehmen in diesem Beispiel nach der Herstellung des Befestigungselementes die dargestellte Lage ein. Diese Lage kann jedoch auch modifiziert werden und die Exzenter können mehr oder weniger abgespreizt sein. Der Schaft 1 mit den Exzentern 2 wird vorzugsweise aus Kunststoff gefertigt, wenn das Befestigungselement zur Wandmontage von Installationsteilen, wie Kabeln oder Rohren dienen soll. Für grössere Belastungen können der Schaft 1 wie auch die Exzenter 2 aus Metall oder anderen Werkstoffen hergestellt sein.

Jeder der Exzenter 2 wird von einer Kugelfläche 3 und zwei Ebenen 4, 5 begrenzt, wobei der Kugelmittelpunkt ausserhalb der Drehachse 6 des Exzenters 2 liegt. Werden zwei in einer Querschnittsebene des Schaftes 1 liegende Exzenter 2 gleichsinnig gedreht, dann ändert sich der wirksame Durchmesser des Befestigungselementes im Schaftbereich. An Stelle der in Fig. 1 dargestellten, als Berührungspunkt erscheinenden Drehachse 6 kann der Exzenter 2 auch mittels eines Steges am Schaft 1 befestigt sein. Fig. 1a zeigt eine mögliche Befestigung von Exzentern 2 am Schaft über einen Steg 6' bzw. über eine breitere Basisfläche 6'', die jedoch ein Verschwenken der Exzenter zulässt. Auch diese Verbindungsarten zwischen Schaft und Exzenter sind möglich. Die Form des Exzenters 2 gemäss Fig. 1 ist in Fig. 3 im Schrägriss sichtbar. Die Exzenter 2 sind Kugelsegmente, deren Drehpunkte nicht mit dem Kugelmittelpunkt zusammenfallen.

Wie Fig. 1b zeigt, kann der Exzenter 2 beispielsweise auch flach ausgebildet sein. Von einer am Schaft 1 drehbar gelagerten Platte 18 wird ein flacher Bauteil getragen, der die nach aussen gekrümmte Exzenterfläche 3 trägt.

Die Fig. 4, 5 und 6 zeigen Bohrlöcher 7, 8, 9 mit unterschiedlichen Durchmessern, jedoch gleiche Befestigungselemente in den Bohrlöchern. So weisen der Schaft 1 und die Exzenter 2', 2'', 2''' in den Fig. 4, 5, 6 gleiche Abmessungen auf. Die Bohrlöcher 7, 8, 9 wurden kürzer dargestellt, als dies in der Praxis der Fall wäre, damit jeweils ein Paar der Exzenter 2 in ihrer herstellungsbedingten Grundstellung verbleibt und daher ein Vergleich möglich ist. Der in die Bohrung 7 eingeschobene Schaft 1 zeigt Exzenter 2', die beim Einschieben in das Bohrloch 7 bis zu ihrer geringsten Ausladung verdreht wurden. Die Exzenter 2' liegen auf Grund der Materialabhängigen Elastizität an der Bohrlochwand mit Vorspannung an. Wird Zug auf den Schaft 1 ausgeübt, dann haben die Exzenter das Bestreben, den wirksamen Durchmesser des Schaftes 1 im Bohrloch zu vergrössern und es kommt zu einer radialen Kraftwirkung der Exzenter 2' gegen die Bohrlochwand, welche den festen Sitz des Befestigungselementes bewirkt.

Fig. 5 zeigt ein grosses Bohrloch 8, in dem der Schaft 1 steckt, wobei die Exzenter 2'' beim Einschieben in eine Mittelstellung verdreht wurden. Auch in Fig. 5 führt ein Zug auf den Schaft zur Vergrösserung des wirksamen Durchmessers durch Abrollen der Exzenter 2'' an der Bohrlochwand, so dass auch in diesem Fall eine Ankerwirkung eintritt. Gleiches gilt für ein Bohrloch 9 noch grösseren Durchmessers, an dessen Wand die aus der herstellungsbedingten Lage (Exzenter 2) nur geringfügig verdrehten Exzenter 2''' anliegen (Fig. 6).

Damit auch auf einem unbelasteten Schaft ein gewisser Zug einwirkt, können im Kopfbereich des Schaftes schräggestellte Schenkel 10, 11 (Fig. 7) vorgesehen sein, die beim vollständigen Einschieben aus der Schrägstellung gegen die Elastizität des Materials in die Strecklage gedrückt werden. Die Reaktionskraft wirkt in Zugrichtung auf das Befestigungselement und spannt das Befestigungselement vor.

Gemäss Fig. 7, 8 und 9 tragen die Schenkel 10, 11 ferner noch eine Verzahnung 12 und die Klemmbacken 13 weisen Fortsätze 14 zum Eingriff in die Verzahnung auf. Wird das Befestigungselement axial bis zum Anschlag in das Bohrloch gedrückt (Fig. 8), dann greifen die Fortsätze 14 so in die Verzahnung 12 ein, dass die zentrische Lage der Klemmbacken 13 gesichert ist. Da der Schaft 1 bei der Ausführung nach den Fig. 7, 8 und 9 im oberen Bereich ein Verbiegen zulässt (Fig. 9), können die Klemmbacken 13 beim Einschieben des Schaftes auch aussermittig in der Verzahnung 12 fixiert werden. Diese Möglichkeit ist wichtig, wenn die Bohrlöcher zur Befestigung einer geraden Leitung nicht exakt auf einer Geraden liegend gebohrt wurden. Kleine Abweichungen nach oben oder unten können so bei der Endmontage korrigiert werden, ohne dass ein neues Loch gebohrt werden muss. Der Verlauf einer Leitung kann also trotz fehlerhaft eingebrachter Bohrungen gerade sein.

Die Fig. 10 bis 13 zeigen Beispiele von Ausführungsvarianten von Halterungen, die auf einem Schaft 1 vorgesehen sein können. Gemäss Fig. 10 ist der Schaft 1 zweigeteilt und die beiden Hälften 1', 1'' mit einer Schlaufe 14 aus Kunststoff od.dgl. verbunden. In die Schlaufe 19 wird ein Kabel oder ein Rohr eingelegt, die beiden Schafthälften 1', 1'' werden zusammengedrückt und in ein Bohrloch gesteckt. Es ergibt sich somit eine Dübelschelle, die rasch und sicher in jeder Lage montiert (gesteckt) werden kann. Fig. 11 zeigt Klemmbacken 15, in die ein Montagerohr einrasten kann. Zum Festhalten von zwei parallelen Leitungen dient das Befestigungselement nach Fig. 12. Ein Doppelbügel 16 ist an den Schaft 1 angeformt, die die Leitungen übergreift und festhält. Fig. 13 zeigt einen Nagel, der aus einem Schaft 1 und einem angesetzten Kopf 17 besteht. Ein solches Befestigungselement dient zum Fixieren von Gegenständen, die Löcher aufweisen, wie z.B. Hinweistafeln od.dgl. Viele Anwendungsmöglichkeiten sind denkbar, da die Art der am Schaft 1 vorgesehenen Halterungen beliebig gewählt werden kann. So kann der Schaft einen Haken tragen oder zu einem Gewindebolzen verlängert sein, damit ein Gegenstand an die Wand (Decke, Boden) geschraubt werden kann. Wird auf den Gewindebolzen vorerst eine Lochplatte (Beilagscheibe) aufgesetzt und dann die Mutter aufgeschraubt, so ergibt sich ein vorgespannter Zuganker, dessen vorragender Gewindebolzen zu Befestigungszwecken dienen kann.

Bei einer Ausführung mit einem geteilten Schaft (z.B. Fig. 10) kann die Vorspannung der Exzenter durch die Spreizwirkung der Schlaufe 19 erreicht werden. Die Exzenter können dann ohne Vorspannung gegenüber dem Schaft in jeder Lage am Schaft angeordnet sein. So etwa wird die 90° Lage bevorzugt, in welcher der Gesamtquerschnitt des Befestigungselementes am grössten und daher auch das Spektrum der von einer konkreten Ausführung eines Befestigungselementes erfassbaren Bohrlöcher ein Maximum ist.

Zur Vergrösserung des Einsatzbereiches können zwischen die Schenkel auch Kerne geschoben werden, so dass die Schenkel distanziert werden und die Exzenter auch in einem Bohrloch Halt finden, aus dem sie ohne Kern herausfallen würden. Diese Kerne können als zungenartige Plättchen am Befestigungselement hängen und entweder weggerissen oder bei Bedarf zur Durchmesservergrösserung zwischengesteckt werden.

Es ist auch möglich, ein Befestigungselement mit mehr als zwei Schenkeln auszubilden, die alle miteinander (gegebenenfalls elastisch und unter radialer Vorspannung) verbunden sind.

Wenn die Schenkel einer Ausführung gemäss Fig. 10 im Querschnitt abgeschrägte Flanken haben (Trapez- oder Dreiecksquerschnitte), dann kann auch ein zweites Befestigungselement um 90° verdreht zusammen mit dem erstgenannten Befestigungselement nach Fig. 10 in ein Bohrloch eingeschoben werden. Es sind dann vier Schenkel im Bohrloch. Auch auf diese Weise kann eine Ausführung in Kombination für noch grössere Bohrlöcher verwendet werden. Die Schlaufe 14 umfängt dann z.B. ein zu montierendes Rohr, während die Schlaufe des um 90° axial verdrehten Befestigungselementes als Unterlagen für das Rohr dient und dieses nach aussen drückt. Dadurch wird ein Zug auf die zwei Schenkel des einen Befestigungselementes ausgeübt, deren Exzenter dann besonders festen Kraftschluss mit der Bohrlochwand bewirken.

### Patentansprüche

1. Befestigungselement, insbesondere für Installationsrohre oder -kabel an einer Wand oder Decke, das einen gegebenenfalls längsgeteilten Schaft (1) aufweist, der von Exzentern (2) gebildete, in einer die Schaftachse enthaltenden Ebene verschwenkbaren Spreizkörper zur kraftschlüssigen Verbindung mit einer Bohrlochwand trägt, wobei die Exzenterflächen (3) in bezug auf die Schwenkpunkte bzw.-achsen (6) der Exzenter (2) in Ausziehrichtung des Befestigungselementes aus dem Bohrloch (7, 8, 9) gesehen zunehmenden Abstand aufweisen, insbesondere in einem Schnitt in Längsrichtung zum Schaft (1) eine nach aussen gekrümmte Linie bilden, dadurch gekennzeichnet, dass die Exzenter (2, 2', 2'', 2''') mit dem Schaft (1) einstückig ausgebildet und über eine dünne Biegeverbindung (6) mit ihm verbunden sind, z.B. im Bereich der Schwenkachse (6) durch einen dünnen Steg mit dem Schaft (1) verbunden sind, wobei die Schwenkpunkte bzw. -achsen (6) der Exzenter (2, 2', 2'', 2''') im Bereich der Schaftoberfläche (1) liegen.

2. Befestigungselement nach Anspruch 1, dadurch gekennzeichnet, dass die Krümmung der Exzenterfläche (3) kreisförmig, elliptisch oder gemäss der Umfangslinie eines Vieleckes verläuft.

3. Befestigungselement nach Anspruch 1 oder 2, dadurch gekennzeichnet, dass die Exzenterfläche (3) eine Kugelfläche ist, deren Mittelpunkt ausserhalb des Drehpunkts bzw. der Drehachse (6) liegt.

4. Befestigungselement nach Anspruch 1 oder 2, dadurch gekennzeichnet, dass die Exzenterfläche (3) eine Zylinderfläche ist, deren Achse ausserhalb der Drehachse (6) des Exzenters (2) liegt.

5. Befestigungselement nach Anspruch 3 oder 4, dadurch gekennzeichnet, dass der Mittelpunkt der Kugel- oder Zylinderfläche (3) der Halterung näher gelegen ist als der Drehpunkt (6) des Exzenters (2) oder auf derselben Höhe wie dieser gelegen ist.

6. Befestigungselement nach einem der Ansprüche 1 bis 5, dadurch gekennzeichnet, dass die Exzenterflächen (3) eine rauhe, insbesondere gerippte Oberfläche aufweisen.

7. Befestigungselement nach einem der Ansprüche 1 bis 6, dadurch gekennzeichnet, dass der Schaft (1) etwa rechteckigen Querschnitt aufweist und die Exzenter (2) die Stirnansicht des Befestigungselementes zu einem Oval ergänzen, dessen kleinster Durchmesser bei Anliegen der einen Ebene (4) des Exzenters (2) am Schaft (1) in Einschubstellung etwa dem Nenndurchmesser eines korrespondierenden Bohrloches (7, 8, 9) entspricht (Fig. 4).

8. Befestigungselement nach einem der Ansprüche 1 bis 7, dadurch gekennzeichnet, dass die Exzenter (2) in Schwenkrichtung auf ihre grösste Ausladung vorgespannt sind.

9. Befestigungselement nach Anspruch 8, dadurch gekennzeichnet, dass in der grössten Ausladung die Exzenterfläche bzw. andere Ebene (5) des Exzenters (2) am Schaft (1) anliegt.

10. Befestigungselement nach einem der Ansprüche 1 bis 9, dadurch gekennzeichnet, dass der Schaft (1) an seinem der Schaftspitze gegenüberliegenden Ende mindestens einen Schenkel (10, 11) aufweist, der gegen die Schaftspitze geneigt ist und der entgegen Federkraft, insbesondere seiner materialbedingten Elastizität, in Richtung auf die 90°-Lage gegenüber der Schaftachse verdrehbar ist (Fig. 7).

11. Befestigungselement nach Anspruch 10, dadurch gekennzeichnet, dass zwei diametral liegende Schenkel (10, 11) vorgesehen sind, die Zähne (12) tragen und dass eine am Schaft angeordnete Halterung (13) Fortsätze (14) aufweist, die etwa bei Strecklage der Schenkel (10, 11) in die Zahnlücken einsetzbar sind.

**Revendications**

1. Elément de fixation, en particulier pour des tubes ou câbles d'installation sur un mur ou un plafond, pourvu d'une tige (1) éventuellement divisée longitudinalement et portant des pitons à expansion formés par excentriques (2) pivotant dans un plan contenant l'axe de la tige pour une liaison solidaire avec la paroi d'une forure, la distance entre les faces d'excentriques (3) et les centres de rotation ou axes de rotation (6) augmentant en direction de rotation de l'élément de fixation vers l'éxteriur de la forure (7, 8, 9) et formant, en particulier en section en direction longitudinale par rapport à la tige (1), une ligne courbée vers l'extérieur, caractérisé en ce que les excentriques (2, 2', 2'', 2''') sont formés intégralement avec la tige (1) et sont reliés à la tige par un raccord (6) mince et flexible, par exemple dans la région de l'axe de rotation (6) par une barrette mince, les centres de rotation ou axes de rotation (6) étant disposés dans le région de la surface de la tige (1).

2. Elément de fixation selon la revendication 1, caractérisé en ce que la courbure de la surface d'excentrique (3) est cirulaire, elliptique ou s'étend selon la ligne de circonférence d'un polygone.

3. Elément de fixation selon la revendicätion 1 ou 2, caractérisé en ce que la face d'excentrique (3) est une surface sphérique dont le centre est situé hors du centre de rotation ou l'axe de rotation (6).

4. Elément de fixation selon la revendication 1 ou 2, caractérisé en ce que la face d'excentrique (3) est une surface cylindrique dont l'axe s'étend hors de l'axe de rotation (6) de l'excentrique (2).

5. Elément de fixation selon la revendication 3 ou 4, caractérisé en ce que le centre de la surface sphérique ou cylindrique (3) est situé plus proche au moyen de fixation que le centre de rotation (6) de l'excentrique (2) ou est situé au même niveau que l'excentrique.

6. Elément de fixation selon une des revendications 1 à 5, caractérisé en ce que chacune des faces (3) des excentriques est pourvue d'une surface rugueuse, en particulier cannelée.

7. Elément de fixation selon une des revendications 1 à 6, caractérisé en ce que la tige (1) est d'une section transversale approximativement rectangulaire et que les excentriques (2) complètent le front de l'élément de fixation pour former un oval, le plus petit diamètre de l'oval, en s'appliquant contre le plan (4) de l'excentrique (2) sur la tige (1) en position d'insertion approximativement correspondant au diamètre nominal d'une forure (7, 8, 9) correspondante (fig. 4).

8. Elément de fixation selon une des revendications 1 à 7, caractérisé en ce que les excentriques (2) sont précontraints à leur plus grande expansion en direction de rotation.

9. Elément de fixation selon la revendication 8, caractérisé en ce que dans la plus grande expansion, la face de l'excentrique ou l'autre plan (5) de l'excentrique (2) s'applique contre la tige (1).

10. Elément de fixation selon une des revendications 1 à 9, caractérisé en ce que la tige (1) est pourvue à son extrémité opposée au point de la tige d'au moins une branche (10, 11) inclinée vers le point de la tige et pivotable contre l'effet d'un ressort, en particulier l'élasticité du matériau dont il est fabriqué, dans la direction d'une position de 90° par rapport a l'axe de la tige (fig. 7).

11. Elément de fixation selon la revendication 10, caractérisé en ce que deux branches (10, 11) diamétralement opposées sont pourvues et portent une denture (12) et qu'un moyen de fixation (13) disposé sur la tige est pourvu de saillies (14) insérables dans les interstices de la denture en position étendue des branches (10, 11).

**Claims**

1. A fastening element, in particular intended for the fastening of installation pipes or cables on a wall or ceiling, having an optionally longitudinally divided stem (1) provided with spreaders formed of eccentrics (2) pivotal in a plane containing the stem axis for a positive connection with the wall of a bore hole, with the distance of the eccentric faces (3) from the centers of rotation or axes of rotation (6) increasing in rotating direction of the fastening element out of the bore hole (7, 8, 9), in particular forming, in section in longitudinal direction in relation to the stem (1), a line curved outwards from the stem, characterized in taht the eccentrics (2, 2', 2'', 2''') are formed integrally with the stem (1) and are connected to the stem by a thin flexible connection (6), for instance connected with the stem (1) in the region of the axis of rotation (6) by a thin web, with the centers of rotation or axes of rotation (6) of the eccentrics (2, 2', 2'', 2''') disposed in the region of the surface of the stem (1).

2. The fastening element according to claim 1, wherein the curvature of the eccentric surface (3) is circular, elliptical or extends according to the circumference line of a polygon.

3. The fastening element according to claim 1 or 2, wherein the eccentric surface (3) has the shape of a sphere whose center is displaced from the center or axis of rotation (6).

4. The fastening element according to claim 1 or 2, wherein the eccentric surface (3) is a cylindrical face whose axis is displaced from the axis of rotation (6) of the eccentric (2).

5. The fastening element according to claim 3 or 4, wherein the center of the spherical or cylindrical face (3) is positioned closer to the fastening means than the center of rotation (6) of the eccentric (2) or is positioned on the same level as the eccentric.

6. The fastening element according to any one of the claims 1 to 5, wherein each eccentric face (3) is provided with a rough, in particular corrugated surface.

7. The fastening element according to any one of the claims 1 to 6, wherein the stem (1) has an approximately reactangular cross section and the eccentrics (2) complete the front face view of the fastening element into an oval, with the smallest diameter of the oval on abutting the one plane (4) of the eccentric (2) on the stem (1) in inserting position approximately corresponding to the nominal diameter of a corresponding bore hole (7, 8, 9). (Fig. 4.)

8. The fastening element according to any one of the claims 1 to 7, wherein the eccentrics (2) are biassed to their largest spread in rotating direction.

9. The fastening element according to claim 8, wherein at largest spread, the eccentric face or other plane (5) of the eccentric (2) abuts the stem (1).

10. The fastening element according to any one of the claims 1 to 9, wherein the stem (1) is provided on its end opposing the point of the stem with at least one leg (10, 11) which is inclined towards the point of the stem and rotatable against spring force, in particular the elasticity of the material is it made of, in the direction of a position of 90 degrees in relation to the axis of the stem (Fig. 7).

11. The fastening element according to claim 10, wherein two diametrically opposed legs (10, 11) are provided and carry a serration (12) and a fastening means (13) provided on the stem is provided with protrusions (14) which are insertable into the gaps of the serration at extended position of the legs (10, 11).

Fig. 1

Fig. 1a

Fig. 1b

Fig. 3

Fig. 2

Fig. 4  Fig. 5  Fig. 6  Fig. 7  Fig. 8  Fig. 9

Fig. 10  Fig. 11  Fig. 12  Fig. 13